# EUROPÄISCHE PATENTSCHRIFT

(11) **EP 0 827 568 B1**
(45) Veröffentlichungstag und Bekanntmachung des Hinweises auf die Patenterteilung: **09.01.2002**
(21) Anmeldenummer: 96945520.3
(22) Anmeldetag: 22.10.1996
(51) Int. Cl.: F02M 41/12

(54) **KRAFTSTOFFEINSPRITZPUMPE**
FUEL INJECTION PUMP
POMPE D'INJECTION DE CARBURANT

(30) Priorität: 08.11.1995 DE 19541606
(43) Veröffentlichungstag der Anmeldung: 11.03.1998
(73) Patentinhaber: ROBERT BOSCH GMBH, 70442 Stuttgart (DE)
(72) Erfinder: SIMON, Helmut, D-73033 Göppingen (DE)
(74) Vertreter: Böer, Wilfried
(86) Internationale Anmeldenummer: DE9602002
(87) Internationale Veröffentlichungsnummer: WO9717537

(56) Entgegenhaltungen:
- EP-A- 0 369 155
- CH-A- 136 113
- DE-B- 1 154 680
- DE-C- 426 748
- GB-A- 626 942
- US-A- 1 413 117
- US-A- 1 648 078
- US-A- 3 606 768

## Beschreibung

### Stand der Technik

Die Erfindung betrifft eine Kraftstoffeinspritzpumpe für Brennkraftmaschinen nach der Gattung des Anspruchs 1. Bei einer aus der EP-A-0 369 155 bekannten Pumpe dieser Art ist die Kreuzscheibe der Kreuzscheibenkupplung, die das Antriebsmoment von den Klauen der Antriebswelle auf die Klauen des Pump- und Verteilerglieds überträgt, in axialer Richtung frei beweglich zwischen den Klauenpaaren angeordnet.

### Vorteile der Erfindung

Bei der erfindungsgemäßen Kraftstoffeinspritzpumpe wird die Verschleißfestigkeit der Anlageflächen zwischen Kreuzscheibe und in diese eingreifenden Klauen erhöht. Des weiteren sind höhere übertragbare Momente zwischen den Klauen und der Kreuzscheibe möglich. Darüber hinaus ergibt sich in der Kreuzscheibenkupplung eine Geräuschreduzierung. Die vorgenannten Vorteile ergeben sich daraus, dass die bisherige Gleitreibung zwischen den in die Kreuzscheibe eingreifenden Klauen erfindungsgemäß durch eine Rollreibung ersetzt sind. Die Kreuzscheibe kann ferner gewichtsmäßig leichter und kostengünstiger als bisher hergestellt werden. Sie besitzt die Funktion eines Wälzlagerkäfigs mit vier Stegen, in denen die einzelnen Wälzkörper gelagert sind. Die Wälzkörper durchgreifen dabei die Stege in Umfangsrichtung der Kreuzscheibe, so dass diese Wälzkörper gleichzeitig an den an- und abtriebsseitig angreifenden unterschiedlichen Klauen angreifen. Bei einer Relativverschiebung der an- und abtriebsseitigen Klauen gegeneinander führt auch die Kreuzscheibe Axialbewegungen aus.

Da die Kraftübertragung zwischen den an- und abtriebsseitigen Klauen allein über die Wälzkörper in der Kreuzscheibe erfolgt, kann das Material für die nur noch einen Wälzlagerkäfig darstellende Kreuzscheibe von demjenigen der Wälzkörper unterschiedlich sein. So kann die als Wälzlagerkäfig dienende Kreuzscheibe vorteilhafterweise aus Kunststoff gemäß Anspruch 2 ausgebildet sein. Nach Anspruch 3 sind die Wälzkörper Rollen.

Die an- und abtriebsseitigen Klauen erhalten nach Anspruch 4 vorteilhafterweise die Form dreieckiger Segmente für einen radial formschlüssigen Eingriff in die Aufnahmen zwischen den Stegen des Wälzlagerkäfigs der Kreuzscheibe.

### Zeichnung

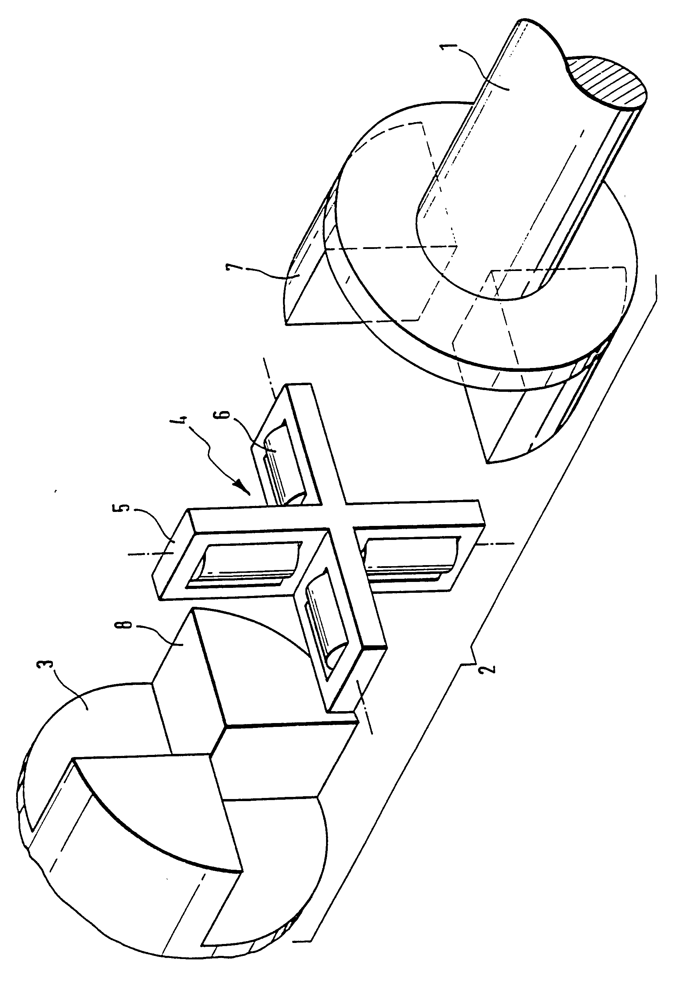

Die Zeichnung zeigt in Explosionsdarstellung eine Kreuzscheibenkupplung, bei der die Träger der an- und abtriebsseitigen Klauen lediglich schematisch dargestellt sind.

### Beschreibung eines Ausführungsbeispiels

In einem nicht dargestellten Gehäuse einer Kraftstoffeinspritzpumpe ist eine Antriebswelle 1 drehbar gelagert. Die Antriebswelle 1 ist über eine Kreuzscheibenkupplung 2 mit einem Pump- und Verteilerglied über eine Hubscheibe 3 gekuppelt.

Die Kreuzscheibenkupplung 2 hat eine Kreuzscheibe 4 mit vier in jeweils rechten Winkeln zueinander abstehenden Stegen 5. In den Stegen 5 ist jeweils als Wälzkörper eine Rolle 6 drehbar um eine radiale Achse gelagert. An der Antriebsscheibe 1 und der Hubscheibe 3 sind jeweils ein Paar Klauen 7 und 8 um 90° zueinander versetzt angebracht. Mit diesen Klauen 7 und 8 greifen die Antriebswelle 1 und die Hubscheibe 3 bei montierter Kreuzscheibenkupplung 2 in die Zwischenräume zwischen den Stegen 5 der Kreuzscheibe 4 ein. Der Eingriff ist derart, daß die Klauen 7 und 8 jeweils praktisch spielfrei an den Rollen 6 der Kreuzscheibe 4 axial beweglich anliegen.

Bei den im Betrieb der Kraftstoffeinspritzpumpe erfolgenden Hubbewegungen der Hubscheibe 3 führt die Kreuzscheibe 4 Axialbewegungen aus, wodurch die Momentenübertragung zwischen den Klauen 7 und 8 der Antriebswelle 1 bzw. der Hubscheibe 3 über Rollreibung aufweisende Axialbewegungen erfolgt.

Die Klauen 7 und 8 können festigkeitsmäßig günstig als relativ große Dreiecksegmente ausgeführt werden. Die Kreuzscheibe selbst ist denkbar einfach herstellbar und zwar insbesondere aus Kunststoff, da die Stege 5 lediglich als Positionshalter der Rollen 6 dienen und damit praktisch keine Kräfte zu übertragen haben. Damit ist die Kreuzscheibe 4 nicht nur einfach, sondern auch gewichtsmäßig äußerst leicht herstellbar.

## Patentansprüche

1. Kraftstoffeinspritzpumpe mit einer Antriebswelle (1), mit einem axial hin- und hergehenden und gleichzeitig rotierenden Pump- und Verteilerglied (3) und mit einer die Antriebswelle mit dem Pump- und Verteilerglied (3) verbindenden Kreuzscheibenkupplung (2), die an der Antriebswelle (1) abtriebsseitig und an einem pump- und verteilerseitigen Teil (3) antriebsseitig jeweils ein einander gegengerichtetes Paar Klauen (7, 8) aufweist, zwischen denen ein die gegengerichteten Klauenpaare (7, 8) in formschlüssig angepaßten Klauenaufnahmen führenden Kreuzscheibe (4) angeordnet ist, **dadurch gekennzeichnet, dass** die Kreuzscheibe (4) aus vier zentral rechtwinklig aneinanderstoßenden radial ausgerichteten Stegen (5) mit dazwischenliegenden Aufnahmen für die Klauen (7, 8) besteht und Wälzkörper (6) in den Stegen (5) um deren radiale Achse drehend und in beiden Richtungen der Achse der Kreuzscheibe (4) überstehend gelagert sind.

2. Kraftstoffeinspritzpumpe nach Anspruch 1, **dadurch gekennzeichnet, dass** der Wälzlagerkäfig der Kreuzscheibe (4) aus Kunststoff besteht.

3. Kraftstoffeinspritzpumpe nach Anspruch 1, **dadurch gekennzeichnet, dass** die Wälzkörper Rollen (6) sind.

4. Kraftstoffeinspritzpumpe nach einem der vorhergehenden Ansprüche, **dadurch gekennzeichnet, dass** die ab- und antriebsseitigen Klauen (7, 8) als dreieckförmige in Zwischenräume der Stege (5) der Kreuzscheibe (4) radial formschlüssig eingreifende Segmente ausgebildet sind.

## Claims

1. Fuel injection pump with a drive shaft (1), with a pumping and distributing member (3) moving axially to and fro and simultaneously rotating, and with a cross-key coupling (2) which connects the drive shaft to the pumping and distributing member (3) and which has a pair of claws (7, 8) in each case on the drive shaft (1), on the driven side, and on a pumping and distributing part (3), on the drive side, the said pairs of claws being oppositely directed to one another, and there being arranged between them a cross key (4) which guides the oppositely directed pairs of claws (7, 8) into positively adapted claw receptacles, **characterized in that** the cross key (4) consists of four radially oriented arms (5) butting centrally on one another at right angles and having receptacles, located between them, for the claws (7, 8), and rolling bodies (6) are mounted in the arms (5) so as to rotate about their radial axis and so as to project in both directions of the axis of the cross key (4).

2. Fuel injection pump according to Claim 1, **characterized in that** the rolling-bearing cage of the cross key (4) consists of plastic.

3. Fuel injection pump according to Claim 1, **characterized in that** the rolling bodies are rollers (6).

4. Fuel injection pump according to one of the preceding claims, **characterized in that** the driven-side and drive-side claws (7, 8) are designed as triangular segments positively engaging radially into interspaces of the arms (5) of the cross key (4)

## Revendications

1. Pompe d'injection de carburant comportant un arbre d'entraînement (1), un organe de pompage et de distribution (3) effectuant un mouvement alternatif, axial, combiné à un mouvement de rotation et un joint d'Oldham (3), reliant l'arbre d'entraînement à l'organe de pompage et de distribution (3), ce joint ayant du côté de sortie de l'arbre d'entraînement (1) et du côté d'entrée de l'organe de pompage et de distribution (3), chaque fois une paire de griffes (7, 8) dirigées l'une vers l'autre et entre lesquelles se trouve un organe en forme de croix (4) avec des logements à griffes adaptés par une liaison par la forme aux paires de griffes (7, 8) opposées,
**caractérisée en ce que**
l'organe en forme de croix (4) se compose de quatre branches (5) alignées radialement à l'équerre à partir du centre en s'écartant, et entre celles-ci se trouvent les logements pour les griffes (7, 8) et des organes de roulement (6) dans les branches (5), tournant autour d'axes radiaux, et montés en regard, dans les deux directions de l'axe de l'organe en forme de croix (4).

2. Pompe d'injection de carburant selon la revendication 1,
**caractérisée en ce que**
la cage à organes de roulement de l'organe en forme de croix (4) est en matière plastique.

3. Pompe d'injection de carburant selon la revendication 1,
**caractérisée en ce que**
les organes de roulement sont des rouleaux (6).

4. Pompe d'injection de carburant selon l'une des revendications précédentes,
**caractérisée en ce que**
les griffes d'entrée et de sortie d'entraînement (7, 8) sont des segments de forme triangulaire, qui pénètrent radialement par une liaison de forme dans les intervalles entre les branches (5) de l'organe en forme de croix (4).
